# DEMANDE DE BREVET EUROPEEN

(11) **EP 3 453 946 A1**
(43) Date de publication de la demande: **13.03.2019**
(21) Numéro de dépôt: 18193471.2
(22) Date de dépôt: 10.09.2018
(51) Int. Cl.: F21S 41/20

(54) **MODULE LUMINEUX POUR VÉHICULE AUTOMOBILE, ET DISPOSITIF D'ÉCLAIRAGE ET/OU DE SIGNALISATION MUNI D'UN TEL MODULE**

(30) Priorité: 12.09.2017 FR 1758414
(71) Demandeur: Valeo Vision, 93012 Bobigny Cedex (FR)
(72) Inventeur: EGAL, Fabrice, 93012 BOBIGNY Cedex (FR); RIZZI, Julien, 93012 BOBIGNY Cedex (FR); RUIZ-ARANZAES, David, 93012 BOBIGNY Cedex (FR)
(74) Mandataire: Valeo Vision

(57) **Abrégé**

La présente invention concerne un module lumineux pour véhicule automobile (1) configuré pour produire un faisceau de sortie (5), comprenant une source lumineuse, un système d'imagerie pixélisée et digitale, et un dispositif optique intercalé entre le source lumineuse et le système d'imagerie pixélisée et digitale de sorte à transmettre au moins une partie des rayons lumineux issus de la source lumineuse vers une surface d'impact du système d'imagerie pixélisée et digitale. Le dispositif optique comprend une première portion configurée pour traiter une première partie des rayons lumineux issus de la source lumineuse et une deuxième portion configurée pour traiter une deuxième partie des rayons lumineux issus de la source lumineuse. La première portion est configurée pour produire un premier faisceau de sortie présentant une première distribution de lumière sur la surface d'impact et la deuxième portion est configurée pour produire un deuxième faisceau de sortie présentant une deuxième distribution de lumière sur la surface d'impact.

## Description

La présente invention est relative notamment à un module lumineux pour véhicule automobile, et à un dispositif d'éclairage et/ou de signalisation muni d'un tel module.

Une application préférée concerne l'industrie automobile, pour l'équipement de véhicules, en particulier pour la réalisation de dispositifs susceptibles d'émettre des faisceaux lumineux, encore appelés fonctions d'éclairage et/ou de signalisation, répondant en général à des réglementations. Par exemple, l'invention peut permettre la production d'un faisceau lumineux, de préférence hautement résolu, de type pixélisé, notamment pour une signalisation et/ou la participation à des fonctions d'éclairage à l'avant d'un véhicule. Elle peut servir à l'affichage de pictogrammes au niveau d'une surface de projection de la lumière sortant.

Les feux de signalisation et/ou d'éclairage de véhicules automobiles, sont des dispositifs lumineux qui comprennent une ou plusieurs sources de lumière et une glace qui ferme le feu. De façon simplifiée, la source lumineuse émet des rayons lumineux pour former un faisceau lumineux qui est dirigé vers la glace afin de produire une plage éclairante qui transmet la lumière à l'extérieur du véhicule. Ces fonctions doivent répondre à des réglementations en matière d'intensité lumineuse et d'angles de visibilité notamment. Les modules d'éclairage et de signalisation connus sont jusqu'à présent prévus pour émettre par exemple :
- un faisceau de croisement, dirigé vers le bas, encore parfois appelé faisceau de code et utilisé en cas de présence d'autres véhicules sur la chaussée;
- un faisceau de route dépourvu de coupure, et caractérisé par un éclairement maximal dans l'axe du véhicule ;
- un faisceau d'éclairage pour temps de brouillard, caractérisé par une coupure plate et une grande largeur d'éclairement ;
- un faisceau de signalisation pour la circulation en ville, encore appelé lampe de ville.

Ces fonctions classiques ont parfois récemment évolué en des fonctions plus complexes comme, par exemple, des feux de route anti-éblouissement ou des feux adaptatifs selon la rotation du volant du véhicule.

Le faisceau de croisement doit assurer à la fois la qualité de l'éclairage et l'absence, ou la réduction, de la gêne occasionnée par le flux lumineux produit pour les véhicules alentours. Actuellement, les feux de croisement sont essentiellement définis dans ce but, avec, en particulier, le recours à des coupures, notamment avec une portion coudée dite « kink » en haut de faisceau, de sorte à limiter précisément ou éviter l'éclairement au-dessus de la ligne d'horizon, et à concevoir au mieux une zone de projection de lumière à proscrire car susceptible de gêner le conducteur d'un véhicule croisé.

Récemment, on a aussi développé des feux permettant des fonctions d'affichage de pictogrammes, bien utiles pour signifier des informations à destination, par exemple, du conducteur. On peut ainsi, pour illustration, afficher une flèche sur la bande de roulement de la route empruntée de sorte à rappeler une information de virage ou de changement de direction souhaitable. Evidemment, la forme des pictogrammes n'est pas limitée par l'invention.

On connait du document brevet US A1 2008/0198372 un dispositif de projection d'un faisceau lumineux à l'avant d'un véhicule qui comporte un système d'imagerie pixélisée et digitale à base d'une matrice de micro-miroirs. Bien que permettant la projection de motifs, notamment de pictogrammes, cette technique d'émissions de faisceaux pixélisés n'est pas d'intégration satisfaisante relativement aux fonctions d'éclairage réglementaires.

La présente invention vise à remédier au moins en partie aux inconvénients de techniques actuelles.

La présente invention concerne, suivant un aspect, un module lumineux pour véhicule automobile configuré pour produire un faisceau de sortie, comprenant une source lumineuse, un système d'imagerie pixélisée et digitale, et un dispositif optique intercalé, suivant le trajet des rayons lumineux issus de la source lumineuse, entre le source lumineuse et le système d'imagerie pixélisée et digitale de sorte à transmettre au moins une partie des rayons lumineux issus de la source lumineuse vers une surface d'impact du système d'imagerie pixélisée et digitale. De manière avantageuse, le dispositif optique comprend une première portion configurée pour traiter optiquement une première partie des rayons lumineux issus de la source lumineuse et une deuxième portion configurée pour traiter optiquement une deuxième partie, différente de la première partie, des rayons lumineux issus de la source lumineuse, et la première portion est configurée pour produire un premier faisceau de sortie présentant une première distribution spatiale de lumière sur la surface d'impact. La deuxième portion est configurée pour produire un deuxième faisceau de sortie présentant une deuxième distribution spatiale de lumière, différente de la première distribution, sur la surface d'impact.

Ainsi, une seule source peut servir, à destination d'un système pixélisé et en particulier une matrice de micro-miroirs, à différencier l'illumination à la surface d'impact sur le système pixélisé. La concentration de lumière peut, en sortie du module, être différente selon les zones de l'espace. Par exemple, une concentration plus importante de lumière est avantageusement produite dans une zone restreinte de la face du système pixélisé pour produire, en sortie du module, un éclairement plus intense dans une zone du faisceau projeté située vers l'axe optique tout en gardant une bonne homogénéité de concentration de lumière par ailleurs, notamment sur une portion périphérique.

Selon un autre aspect, la présente invention concerne également un dispositif d'éclairage et/ou de signalisation de véhicule automobile équipé d'au moins un module lumineux.

Ce dispositif peut comprendre au moins un module additionnel comprenant au moins l'un parmi un module additionnel configuré pour produire un faisceau de base de feu de croisement et un module additionnel configuré pour produire un faisceau de base de feu de route.

Ainsi, le faisceau pixélisé peut être un complément efficace à un autre faisceau, voire plusieurs. Notamment, dans un cas préféré, le dispositif comprend un module additionnel configuré pour produire un faisceau de base de feu de croisement et un module additionnel configuré pour produire un faisceau de base de feu de route et dans lequel le faisceau de sortie du module chevauche en partie à la fois le faisceau de base de feu de route et le faisceau de base de feu de croisement.

La présente invention concerne également un véhicule équipé d'au moins un module et/ou un dispositif selon la présente invention.

Selon un mode de réalisation particulièrement avantageux, la première distribution spatiale est d'intensité lumineuse homogène dans une zone de contour fermé centrée sur la surface d'impact et couvrant au moins 50% de la surface d'impact. Cette distribution est notamment bien adaptée pour compléter un feu de croisement.

Optionnellement, la deuxième distribution spatiale est d'intensité lumineuse croissante jusqu'à une zone de concentration maximale de lumière. Cela peut permettre de créer un point d'illumination maximale. De préférence, l'intensité lumineuse dans la zone de concentration maximale de lumière est supérieure à l'intensité lumineuse maximale de la première distribution spatiale ; on crée ainsi un maximum de lumière le plus élevé possible.

Eventuellement, la zone de concentration maximale de lumière inclut le centre de la surface d'impact.

Suivant un exemple, la deuxième portion du dispositif optique est configurée pour réfléchir des rayons lumineux vers un dioptre de sortie. On opère ainsi un premier traitement optique. Ce mode optique est réflectif.

Avantageusement, la première portion du dispositif optique est configurée pour transmettre des rayons lumineux vers un dioptre de sortie. Le traitement optique n'inclut de préférence donc pas de réflexion et peut être différent de celui de la première portion. Ce mode optique est réfractif.

Dans un mode de réalisation, le dispositif optique comprend un bloc optique comprenant une première face formant un dioptre d'entrée de rayons issus de la source lumineuse et dotée d'une cavité comprenant un fond et une paroi latérale et une deuxième face, opposée à la première face, formant un dioptre de sortie de rayons lumineux, le bloc étant configuré pour réfléchir vers la deuxième face au moins une partie des rayons entrant dans le bloc par la paroi latérale, et pour transmettre vers la deuxième face au moins une partie des rayons entrant dans le bloc par la fond.

Cela assure la différenciation des deux distributions de manière structurellement simple.

Eventuellement, le bloc est configuré pour réfléchir vers la deuxième face au moins une partie des rayons entrant dans le bloc par la paroi latérale par réflexion totale interne.

Alternativement, le bloc est configuré pour réfléchir vers la deuxième face au moins une partie des rayons entrant dans le bloc par la paroi latérale par réflexion sur une surface réfléchissante le la paroi externe du bloc. Il n'est alors pas nécessaire de prévoir une surface réfléchissante.

Possiblement, le bloc optique est en une seule pièce venue d'une seule matière.

Dans un cas particulier, le dispositif optique comporte un bloc optique comportant un dioptre d'entrée des rayons issus de la source lumineuse et au moins un élément optique additionnel séparé du bloc optique. Cela peut permettre de différencier les fonctions optiques faites par diverses parties du dispositif optique.

Suivant un cas non limitatif, le bloc optique est configuré pour collimater au moins une partie de rayons en sortant et l'élément optique additionnel est configuré pour concentrer les rayons collimatés.

Préférentiellement, le système d'imagerie pixélisés et digitale comprend une matrice de micro-miroirs.

Avantageusement, la source lumineuse comprend une face d'émission de lumière de forme rectangulaire, de préférence dotée d'au moins une diode électroluminescente. Cela permet de préférence de s'adapter, dès l'émission de lumière, à la forme de la surface d'impact du système d'imagerie pixelisée.

Par exemple, la face d'émission de lumière est une homothétie de la surface d'impact. Alternativement, la première portion et la deuxième portion sont configurées pour produire une anamorphose entre la face d'émission et la surface d'impact

Le faisceau de sortie peut être configuré pour projeter au moins un motif de pictogramme.

D'autres caractéristiques et avantages de la présente invention seront mieux compris à l'aide de la description exemplaire et des dessins parmi lesquels :
- la figure 1 montre une schématisation d'une projection d'un faisceau à l'avant d'un véhicule avec une zone de projection de pictogrammes ;
- la figure 2 représente un exemple de répartition de la projection de différents faisceaux à l'avant d'un véhicule sur un écran imaginaire vertical placé perpendiculairement à l'axe optique ;
- la figure 3 illustre une distribution d'éclairage possible grâce à l'invention ;
- la figure 4 illustre une autre distribution d'éclairage que l'on peut produire grâce à l'invention ;
- la figure 5 présente la combinaison issue des distributions d'éclairage des figures 3 et 4 ;
- la figure 6 montre une vue en coupe schématique d'un module de l'invention dans un exemple non limitatif;
- la figure 7 procurent une vue en perspective d'un bloc optique utilisable dans le dispositif optique du module ;
- la figure 8 détaille le chemin des rayons lumineux au travers du dispositif optique dans un mode de réalisation ;
- la figure 9 détaille le chemin des rayons lumineux au travers du dispositif optique dans un autre mode de réalisation ; il en est de même pour la figure 10.

Sauf indication spécifique du contraire, des caractéristiques techniques décrites en détail pour un mode de réalisation donné peuvent être combinées à des caractéristiques techniques décrites dans le contexte d'autres modes de réalisation décrits à titre exemplaire et non limitatif.

Dans les caractéristiques exposées ci-après, les termes relatifs à la verticalité, l'horizontalité et à la transversalité, ou leurs équivalents, s'entendent par rapport à la position dans laquelle le module d'éclairage est destiné à être monté dans un véhicule. Les termes « vertical » et « horizontal » sont utilisés dans la présente description pour désigner des directions, suivant une orientation perpendiculaire au plan de l'horizon pour le terme « vertical », et suivant une orientation parallèle au plan de l'horizon pour le terme « horizontal ». Elles sont à considérer dans les conditions de fonctionnement du dispositif dans un véhicule. L'emploi de ces mots ne signifie pas que de légères variations autour des directions verticale et horizontale soient exclues de l'invention. Par exemple, une inclinaison relativement à ces directions de l'ordre de + ou - 10° est ici considérée comme une variation mineure autour des deux directions privilégiées.

Le dispositif de l'invention incorpore pour le moins un module permettant de générer un faisceau de type pixélisé, mais assure aussi de préférence la projection d'au moins un autre faisceau, par l'intermédiaire d'au moins un autre module. Le dispositif de l'invention peut donc être complexe et associer plusieurs modules qui peuvent en outre éventuellement partager des composants.

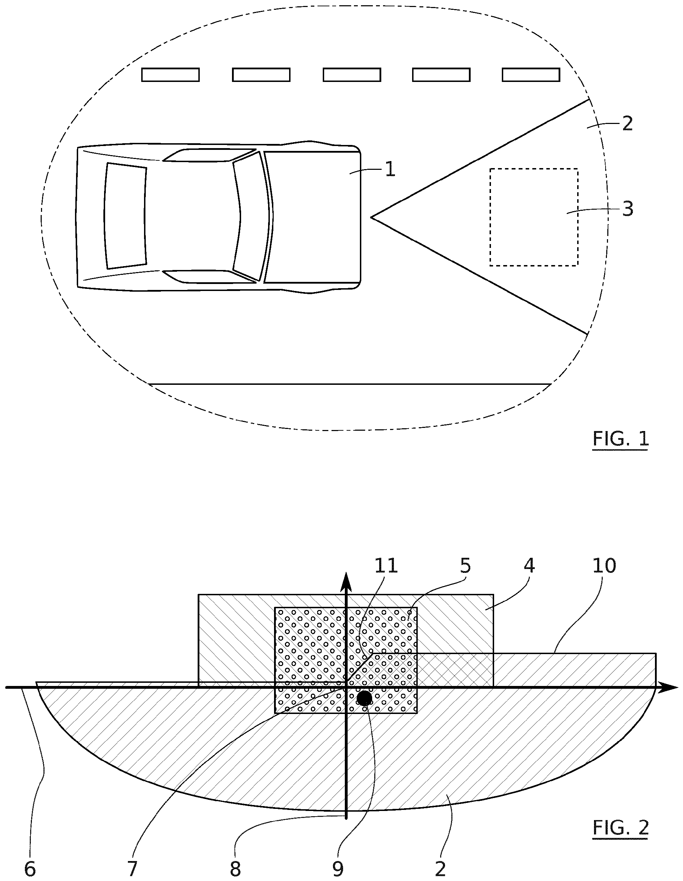

La figure 1 représente un véhicule 1 à l'avant duquel un faisceau, par exemple un feu de croisement (ou encore un feu de route) est projeté. La figure 1 montre également la possibilité, dans une zone 3, de produire l'émission d'un faisceau pixélisé. Cela est particulièrement avantageux pour générer des motifs de pictogrammes. Un seul pictogramme peut être projeté. Plusieurs pictogrammes peuvent aussi être affichés simultanément ou alternativement. Dans l'exemple illustré, la projection simultanée d'un faisceau de base 2 et du faisceau pixélisé 3 permet de produire un feu de croisement.

Dans le cadre de l'invention, on entend par faisceau de croisement un faisceau employé lors de la présence de véhicules croisés et/ou suivis et/ou d'autres éléments (individus, obstacles...) sur la chaussée ou à proximité. Ce faisceau présente une direction moyenne descendante. Il peut être éventuellement caractérisé par une absence de lumière au-dessus d'un plan incliné de 1% vers le bas du côté de la circulation dans l'autre sens, et d'un autre plan incliné de 15 degrés par rapport au précédent du côté de la circulation dans le même sens, ces deux plans définissant une coupure conforme à la réglementation européenne. Cette coupure supérieure descendante a pour but d'éviter d'éblouir les autres usagers présents dans la scène de route s'étendant devant le véhicule ou sur les bas-côtés de la route. Le faisceau de croisement, autrefois issu d'un projecteur simple, a connu des évolutions, la fonction de croisement pouvant être couplée avec d'autres caractéristiques d'éclairage qui sont encore considérés comme des fonctions de feu de croisement au sens de la présente invention. Cela comprend notamment les fonctions suivantes :
- faisceau AFS (abréviation pour « Advanced Frontlighting System » en anglais), qui propose notamment d'autres types de faisceaux. Il s'agit notamment de la fonction dite BL (Bending Light en anglais pour éclairage de virage), qui peut se décomposer en une fonction dite DBL (Dynamic Bending Light en anglais pour éclairage mobile de virage) et une fonction dite FBL (Fixed Bending Light en anglais pour éclairage fixe de virage) ;
- faisceau dit Town Light en anglais, pour éclairage de ville. Cette fonction assure l'élargissement d'un faisceau de type feu de croisement tout en diminuant légèrement sa portée ;
- faisceau dit Motorway Light en anglais, pour éclairage d'autoroute, réalise quant à elle la fonction autoroute. Cette fonction assure une augmentation de la portée d'un feu de croisement en concentrant le flux lumineux du feu de croisement au niveau de l'axe optique du dispositif projecteur considéré ;
- faisceau dit Overhead Light en anglais, pour feu de portique. Cette fonction assure une modification d'un faisceau de feu de croisement typique de telle sorte que des portiques de signalisation situés au-dessus de la route soient éclairés de façon satisfaisante au moyen des feux de croisement ;
- faisceau dit AWL (Adverse Weather Light en anglais, pour feu de mauvais temps).

Le faisceau route de base a pour fonction d'éclairer sur une large étendue la scène face au véhicule mais également sur une distance conséquente, typiquement environ 200 mètres. Ce faisceau lumineux, de par sa fonction d'éclairage, se situe principalement au-dessus de la ligne d'horizon. Il peut présenter un axe optique d'éclairement légèrement ascendant par exemple.

Le dispositif peut aussi servir à former d'autres fonctions d'éclairage via ou en-dehors de celles décrites précédemment.

Comme indiqué précédemment, un aspect de l'invention concerne un module permettant la génération d'un faisceau de sortie du type pixélisé, c'est-à-dire traité par un système d'imagerie pixélisée et digitale offrant une grande flexibilité, par la commande du système d'imagerie, en termes de configurations de faisceaux effectivement projetés. Le terme « système d'imagerie pixélisée et digitale », « système d'imagerie à rayons pixélisés » ou leurs équivalents ont pour définition un système émetteur d'un faisceau lumineux, ledit faisceau lumineux étant formé d'une pluralité de sous faisceaux lumineux, chaque sous faisceau lumineux pouvant être piloté indépendamment des autres sous faisceau lumineux. Ces systèmes peuvent être par exemple des matrices à micro-miroirs, des dispositifs à cristaux liquides, une technologie de traitement numérique de la lumière (Digital Light Processing (DLP) en termes Anglo-Saxon). Les matrices à micro-miroirs sont aussi appelées, en termes Anglo-Saxon, « Digital Micromirror Device » (DMD). Chaque sous faisceau pilotable indépendamment forme un rayon pixélisé. Le pilotage des matrices de micro-miroirs est effectué par une électronique de pilotage. Chaque micro-miroir dispose de manière préférentielle de deux positions de fonctionnement. Une position dite active correspond à une orientation des micro-miroirs permettant la réflexion vers un dioptre de sortie d'un faisceau lumineux incident. Une position dite passive correspond à une orientation des micro-miroirs permettant la réflexion vers une surface absorbante d'un faisceau lumineux incident, c'est à dire vers une direction différente de celle du dioptre de sortie. D'une manière générale, ce type de système d'imagerie est implémenté dans des systèmes micro-électroniques mécaniques connus sous le vocable MEMS.

De façon connue en soi, on utilise une source lumineuse pour illuminer une surface d'impact du système d'imagerie pixélisée, par exemple la face réfléchissante des micro-miroirs d'une matrice de micro-miroirs, et les rayons traités par le système d'imagerie pixélisée sont renvoyés pour être projetés, généralement par l'intermédiaire d'un élément optique de sortie, telles qu'une glace de projecteur ou une lentille de projection. D'une manière générale, la présente invention peut notamment utiliser des sources lumineuses du type diodes électroluminescentes encore communément appelées LEDs. Notamment, ces LEDs peuvent être dotées d'au moins une puce apte à émettre une lumière d'intensité avantageusement ajustable selon la fonction d'éclairage et/ou de signalisation à réaliser. Par ailleurs, le terme source lumineuse s'entend ici d'un ensemble d'au moins une source élémentaire telle une LED apte à produire un flux conduisant à générer en sortie du module de l'invention au moins un faisceau lumineux. Dans un mode avantageux, la face de sortie de la source est de section rectangulaire, ce qui est typique pour des puces à LEDs.

On comprend tout l'intérêt des faisceaux pixélisés dans le domaine automobile et la démultiplication des fonctionnalités qu'ils permettent. Néanmoins, leur intégration dans les véhicules de façon concomitante avec les systèmes de projection d'autres faisceaux est encore largement inexplorée.

La figure 2 présente un exemple selon l'invention d'association d'un faisceau de sortie 5 pixélisé avec un faisceau de base 2 de feu de croisement et un faisceau de base 4 de feu de route. La figure 2 rappelle que le feu de croisement comporte typiquement un bord de coupure 10 à sa limite haute, ce bord pouvant également comporter une partie coudée 11 destinée à différencier deux parties du faisceau de feu de croisement autour d'un plan vertical passant par l'axe optique 7 et comprenant la ligne 8 représentée à la figure 2. D'un côté du plan vertical, la projection est moins haute de sorte à être moins éblouissante à destination de véhicules croisés. On notera que le faisceau de feu de croisement apparaît relativement étalé suivant la ligne d'horizon 6 ce qui correspond à une volonté d'éclairage d'intensité lumineuse homogène dans cette direction pour ce type de fonction. Le faisceau de base 4 feu de route représenté à la figure 2 est quant à lui globalement situé au-dessus de la ligne d'horizon 6 et est beaucoup plus concentré autour de l'axe optique 7, traduisant la volonté d'un éclairage de longue distance pour ce type de fonction.

Ainsi, le feu de croisement requiert un faisceau homogène et large majoritairement 10 situé en deçà de la ligne d'horizon 6 alors que le feu de route requiert un faisceau de grande illumination et est moins étalé latéralement.

La figure 2 illustre en outre la localisation d'une zone de concentration de lumière 9 correspondant à l'endroit où le maximum d'éclairement du faisceau complet (incluant feu de croisement et feu de route) est produit. Généralement, on cherche à ce que ce maximum soit situé en deçà de la ligne d'horizon ou sur celle-ci (mais pas plus haut) et/ou de préférence sur l'axe optique ou du côté de celui-ci comprenant la portion coudée 11. En considérant que la figure 2 définit un repère orthogonal formé par la ligne d'horizon 6 et la ligne verticale 8, le maximum 9 se trouve dans le deuxième quadrant. Il pourrait aussi se trouver sur l'axe optique 7. Suivant une possibilité, ce maximum peut être sur la ligne verticale 8 ou dans un intervalle de -0.5° ; +0.5° autour de cette ligne 8.

Un aspect séparable de la présente invention, visible à la figure 2, est de produire un faisceau de sortie 5 qui chevauche simultanément les faisceaux de base 2 de feu de croisement et de base 4 de feu de route. On peut par exemple ainsi utiliser le faisceau de sortie 5 pour la projection de pictogrammes, au moins en partie dans la zone de chevauchement avec le faisceau de base 2. On peut aussi l'utiliser pour complémenter le feu de route avec une projection chevauchant le faisceau 4. Ainsi, avantageusement, le faisceau 5 est projeté dans une zone intégrant l'axe optique 7, cette zone pouvant par ailleurs être symétrique verticalement autour de l'axe optique ; le faisceau 5 est aussi localisé pour partie en dessous de la ligne d'horizon 6 et pour une autre partie au-dessus. L'invention permet ainsi avec un seul système d'imagerie pixélisée qui produit un faisceau de sortie 5 pixélisé de réaliser à la fois des fonctionnalités anti éblouissement et de code virage dynamique dans la partie de base 4 de feu de route et d'écriture au sol avec projection de pictogrammes dans la partie de base 2 de feu de croisement. Dans ce type de configuration duale (où le faisceau de sortie est à cheval de la ligne d'horizon), la proportion de faisceau de sortie 5 au dessus de la ligne d'horizon est supérieure à 50 %, de préférence entre 60 et 70 %, de sorte à ce que le faisceau de sortie 5 couvre avantageusement un champ vertical s'étendant entre -3°à -2° pour sa limite inférieure et +6° pour sa limite supérieure.

En outre, la combinaison des faisceaux 2, 4 et 5 permet avantageusement de définir une zone de concentration maximale de lumière 9.

Pour réaliser une telle intégration du faisceau pixélisé en combinaison avec les autres faisceaux, la présente invention propose d'intégrer dans le module de génération dudit faisceau un dispositif optique permettant de traiter la lumière issue de la source lumineuse pour distribuer de manière différenciée l'illumination de la surface d'impact du système d'imagerie pixélisée, pour produire un faisceau de sortie 5 présentant une distribution d'illumination optimale, en particulier en conjonction avec d'autres faisceaux réalisant des fonctions d'éclairage et/ou de signalisation.

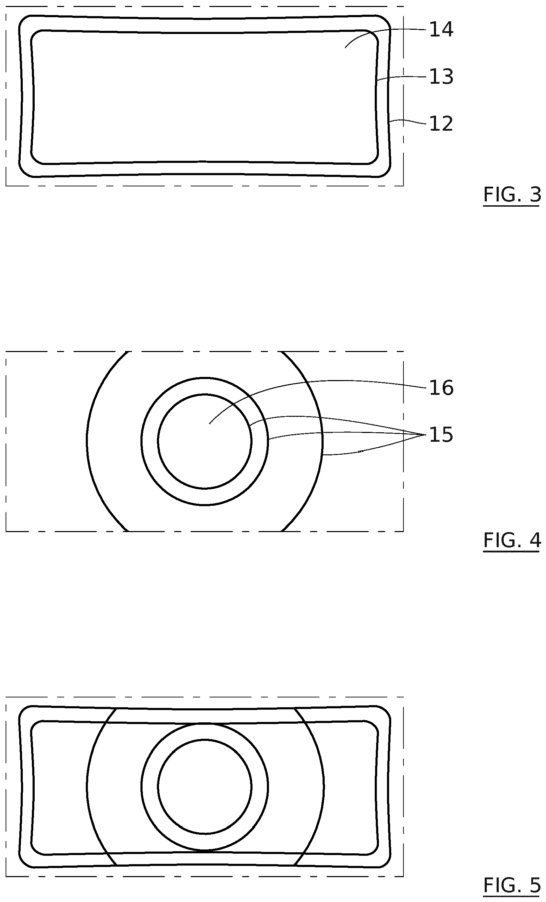

La figure 3 donne un exemple de première distribution de lumière exploitable pour le faisceau pixélisé dans un plan correspondant à la surface d'impact de rayons lumineux sur le système d'imagerie pixélisée et digitale. La répartition de l'illumination est telle que l'intensité lumineuse est sensiblement constante dans une très large zone au centre de la région éclairée, correspondant à la zone 14. De préférence, la zone 14 présente une forme et des dimensions correspondant à celles de la surface d'impact du système d'imagerie. Celle-ci a généralement un pourtour sensiblement rectangulaire, en cohérence avec l'illustration de la figure 3. Dans un mode de réalisation de l'invention, l'ensemble de la région éclairée est constitué par la zone 14 si bien que l'intensité lumineuse est identique partout dans la zone de projection. Cependant, dans la pratique, un gradient d'intensité lumineuse sera généralement constaté en direction de la bordure de la région éclairée. C'est ce qui est illustré avec une ligne correspondant à une zone de variation d'illumination 13 entre la zone 14 et le contour 12 de la région éclairée. De préférence, la zone 13 présente aussi une forme sensiblement rectangulaire.

À titre purement indicatif, le niveau d'intensité lumineuse générée dans la zone 14 peut être supérieur à 2. 10⁷ lux et/ou inférieur à 4.10⁷ lux.

La figure 4 donne un exemple d'une deuxième distribution de lumière sur la surface d'impact du système d'imagerie. Dans cette situation, au contraire de la figure 3, on recherche un accroissement de l'intensité lumineuse en direction d'une zone de concentration maximale de lumière 16. Celle-ci peut être placée au centre de la région éclairée mais ce n'est pas limitatif, en particulier si l'on souhaite obtenir une zone de concentration de lumière 9 sur la projection à l'avant du véhicule qui n'est pas située au niveau de l'axe optique 7, c'est-à-dire suivant l'exemple représenté la figure 2. Avec la distribution de la figure 4, on obtiendra plutôt une projection à l'avant du véhicule tel que le maximum d'intensité lumineuse 9 est situé au niveau de l'axe optique 7 dans la mesure où la zone 16 est centrée sur la surface d'impact du système d'imagerie pixélisée et digitale. Cela peut être modifiable, notamment si le module est pivotant. La figure 4 montre un accroissement progressif de l'intensité lumineuse en direction du centre de la surface éclairée avec des zones de variation d'illumination 15. Celles-ci correspondent à des lignes concentriques autour de la zone 16. À titre purement indicatif, le niveau de l'intensité lumineuse générée dans la zone 16 peut être supérieur à 108 lux.

Tel qu'indiqué plus haut, un aspect séparable de l'invention est la formation d'un faisceau pixélisé associant des distributions de lumière différenciées. À cette fin, un exemple préféré de réalisation de l'invention correspond à associer les distributions de lumière représentées aux figures 3 et 4. C'est cette association qui est représentée sur la figure 5. Cette dernière correspond essentiellement à la superposition des projections lumineuses des deux figures précédentes. On obtient ainsi une large zone périphérique de la projection dans laquelle l'intensité lumineuse est homogène, telle que définie par la zone 14. Néanmoins, une portion, ici centrale, de l'éclairement est plus intense, telle que définie par la zone 16.

Un objectif de l'invention est donc de produire une pluralité de distributions lumineuses différentes, avantageusement deux, à partir d'une seule source lumineuse, pour l'appliquer sur la surface active d'un système d'imagerie pixélisée et digitale, et, en aval, pour créer un faisceau pixélisé ayant une distribution spatiale complexe. Pour y parvenir, l'invention utilise un dispositif optique capable de transformer la répartition des rayons lumineux issus de la source lumineuse de manière différentielle selon les régions de l'espace, et en particulier selon le point d'impact sur la surface d'impact du système d'imagerie.

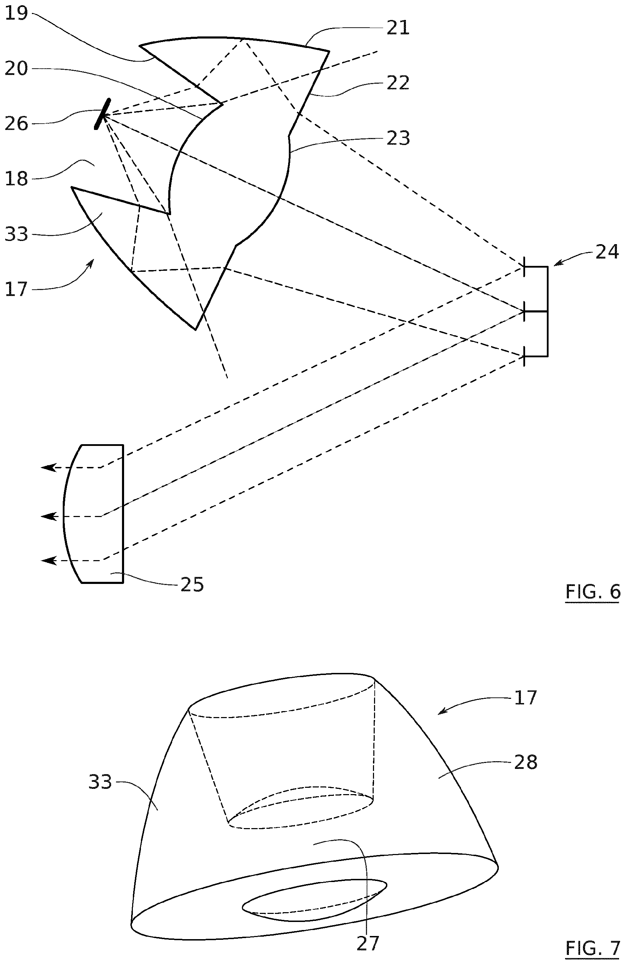

La figure 6 présente un mode de réalisation d'un module de l'invention incorporant un tel dispositif optique 17.

D'amont en aval suivant le trajet des rayons lumineux, on note la présence d'une source lumineuse 26, qui peut être du type précédemment indiqué. De préférence, la source lumineuse 26 est configurée pour émettre dans un demi-espace à partir d'une zone émissive de forme rectangulaire. La figure 6 donne la dimension longue de la forme rectangulaire, la dimension étroite étant située perpendiculairement. Au moins une partie des rayons émis par la source 26 est traitée optiquement par un dispositif optique 17. Ce traitement sera décrit plus en détail ultérieurement. En sortie du dispositif optique 17, au moins une partie des rayons traités impacte la surface du système d'imagerie pixélisée et digitale, ici une matrice de micro-miroirs 24. De préférence, la surface d'impact définie par l'ensemble des micro-miroirs est de forme rectangulaire, avec une dimension longue correspondant à celle visible dans la figure 6 et une dimension étroite perpendiculaire. De préférence, les formes rectangulaires de la source 26 et de la surface d'impact sont identiques ou pour le moins homothétiques. De cette façon, l'adaptation à opérer par le dispositif optique 17 est rendue plus facile, une identité de forme ou de rapport de forme étant présente entre la source et la projection souhaitée.

Selon l'orientation des miroirs, les rayons sont réfléchis soit de manière à participer au faisceau projeté, soit de manière à être inactifs. C'est ainsi que la configuration du faisceau pixélisé peut être contrôlée à volonté. Dans le cas représenté, les rayons actifs sont dirigés vers un élément optique de projection 25, qui est typiquement une lentille de projection.

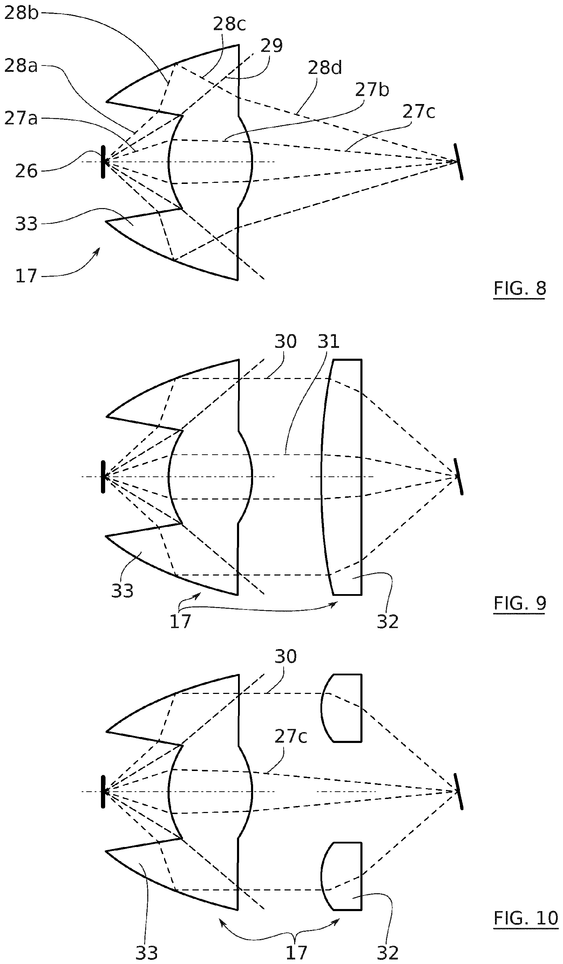

Pour modifier la répartition spatiale des rayons lumineux issus de la source lumineuse 26, le dispositif optique 17 comprend une première portion dans laquelle certains rayons de la source lumineuse 26 vont être traités pour produire la première distribution spatiale, et une deuxième portion dans laquelle d'autres rayons de la source lumineuse 26 vont être traités pour produire la deuxième distribution spatiale. En ce sens, le dispositif optique 17 représenté dans le mode de réalisation de la figure 6 comporte un bloc optique 33 avec différentes régions. De préférence, le bloc optique 33 est un ensemble unitaire, venu d'une seule matière. Il peut s'agir d'un bloc d'un matériau polymère, tel que du polycarbonate. Le bloc optique 33 comporte une région centrale pourvue d'une cavité 18 en regard de laquelle la source lumineuse 26 est configurée pour émettre. La source lumineuse 26 peut être située dans le plan de l'embouchure de la cavité 18. La cavité 18 comporte un fond 20 situé directement en face de la source lumineuse 26, et une paroi latérale 19 raccordant le fond 20 et l'embouchure de la cavité 18. À l'opposé de la zone de placement de la source lumineuse 26, le bloc optique 33 comporte une face de sortie 22. De préférence, la région du bloc optique 33 située entre le fond 20 et la face de sortie 22 forme une première portion au travers de laquelle les rayons lumineux sont traités optiquement pour réaliser la première distribution spatiale. Dans l'exemple considéré, le fond 20 et la face de sortie 22 comportent, dans la zone correspondant à la première portion, ici sensiblement centrale dans le bloc, une forme convexe. Ainsi, dans cette zone, le bloc optique 33 fonctionne comme une lentille disposant d'un dioptre d'entrée, le fond 20, et d'un dioptre de sortie, la surface courbe 23, et les rayons issus de la source 26 y sont transmis avec les effets classiques de la réfraction. D'autres rayons émis par la source 26 entrent dans le bloc optique 33 par la paroi latérale 19. Ainsi, le bloc 33 comporte une deuxième portion dont la face d'entrée est la paroi latérale 19 et qui est située sensiblement en périphérie de la première portion définie par le fond 20, le traitement optique des rayons étant différent dans la deuxième portion relativement à la première portion. Dans cette deuxième portion, ils subissent avantageusement une réflexion. Suivant un premier mode de réalisation, le bloc optique 33 comporte une surface réfléchissante sur laquelle les rayons subissent la réflexion. Il peut s'agir d'un revêtement réfléchissant au niveau de la paroi externe 21 du bloc 33 en dehors de la face de sortie 22 et de la cavité 18. Suivant un autre mode de réalisation, on joue sur les indices de réfraction de sorte à produire une transmission interne totale des rayons au travers de cette deuxième portion du bloc 33. Les figures 8 à 10 donneront des exemples plus précis des chemins lumineux dans le dispositif optique 17.

La figure 7 représente une vue en perspective du bloc optique 33 du mode de réalisation de la figure 6. On peut noter que, de manière avantageuse, le bloc 33 présente une symétrie de révolution. Avantageusement, le fond 20 est centré sur l'axe de symétrie. On note la présence d'une zone 27 au niveau de laquelle se produit la transmission lumineuse et une zone 28 au niveau de laquelle se produit la réflexion lumineuse.

La figure 8 présente en détail certains rayons lumineux dont le parcours est décrit ci-après. Issu de la source 26, un rayon 27a entre dans la zone de transmission 27 du dispositif optique 17 par un dioptre d'entrée constitué par le fond 20 de la cavité 18. La réfraction induite par la modification de milieu modifie l'inclinaison du rayon et produit un rayon réfracté 27b jusqu'à la face de sortie 22. On comprend que la forme donnée aux dioptres d'entrée et de sortie de la zone de transmission 27 permet de régler la distribution spatiale des rayons suivant une première distribution dans cette partie. Cela peut par exemple se produire avec le fonctionnement d'une lentille, par exemple biconvexe comme dans l'exemple, produisant une concentration de faisceaux d'un type déterminé. En sortie, un rayon 27c est dirigé vers la surface réfléchissante d'un miroir de la matrice de micro-miroirs formant dans cet exemple le système d'imagerie pixélisée et digitale.

Un autre rayon issu de la source, 28a, impacte la paroi latérale 19 du bloc optique 33 du dispositif 17. Le changement de milieu produit un rayon réfracté 28b qui est dirigé vers la paroi externe 21 du bloc 33. À ce niveau, il est réfléchi sous forme d'un rayon 28c jusqu'à la face de sortie du bloc 33. Le faisceau sortant 28d est dirigé vers un miroir de la matrice de micro-miroirs suivant une deuxième distribution de lumière. Par exemple, la distribution de lumière correspondant aux rayons réfléchis peut-être plus concentrée et, par exemple, correspondre à la distribution représentée à la figure 4. Par exemple, la distribution de lumière produite par la zone de transmission du dispositif optique peut être plus homogène et correspondre à la distribution illustrée à la figure 3. On notera que certains rayons, comme le rayon 29, peuvent être perdus.

Ces distributions de lumière étant simultanées, on peut obtenir par exemple la distribution finale correspondant à celle de la figure 5. On retrouve la même distribution différentielle de lumière sur le faisceau pixélisé projeté à l'avant du véhicule. Il est entendu que dans ce faisceau général, le module peut être commandé à volonté pour activer ou désactiver tout ou partie des pixels du faisceau pixélisé.

Dans le cas de la figure 8, le dispositif optique 17 est en une seule pièce. Bien évidemment, cette solution n'est pas limitative de l'invention. D'ailleurs, la figure 9 donne une solution alternative dans laquelle le bloc optique 33 est associé à un élément additionnel 32 de sorte à former l'ensemble du dispositif 17. Dans cet exemple, le bloc 33 produit comme précédemment une transmission avec réfraction de certains rayons et une transmission avec réflexion d'autres rayons, selon des distributions spatiales différentes. En sortie, les rayons sont collimatés, correspondant ainsi aux rayons 30 et 31 de la figure 9. L'élément optique additionnel 32 sert à faire converger les rayons vers la matrice de micro-miroirs. Il peut s'agir d'une lentille dont les courbures des dioptres d'entrée et de sortie sont adaptées à la convergence souhaitée.

La figure 10 montre une autre variante dans laquelle le dispositif optique 17 est en plusieurs pièces. Cette fois, le bloc optique 33 produit, dans la zone de réflexion, des rayons collimatés 30 qui sont ensuite concentrés par l'élément optique additionnel 32. Par contre, la première portion du bloc optique 33, fonctionnant par transmission avec réfraction simple, fournit en sortie des rayons 27c directement concentrés vers la matrice de micro-miroirs.

On notera que les exemples précédents permettent la génération de deux distributions différentes simultanées de la lumière issue de la source 26. Il n'est pas exclu que plus de deux distributions soient formées grâce à l'invention, par exemple pour fournir un point de concentration de lumière supplémentaire. D'une manière générale, la pluralité de distributions optiques est produite par une pluralité de modes optiques, réflectifs et réfractifs.

L'invention n'est pas limitée aux modes de réalisation décrits mais s'étend à tout mode de réalisation conforme à son esprit.

### REFERENCES

- 1.: Véhicule
- 2.: Faisceau de base de feu de croisement
- 3.: Zone de pictogrammes
- 4.: Faisceau de base de feu de route
- 5.: Faisceau de sortie
- 6.: Ligne d'horizon
- 7.: Axe optique
- 8.: Ligne verticale
- 9.: Zone de concentration de lumière
- 10.: Bord de coupure
- 11.: Partie coudée
- 12.: Contour de projection
- 13.: Zone de variation d'illumination
- 14.: Zone d'illumination homogène
- 15.: Zone de variation d'illumination
- 16.: Zone de concentration maximale de lumière
- 17.: Dispositif optique
- 18.: Cavité
- 19.: Paroi latérale
- 20.: Fond
- 21.: Paroi externe
- 22.: Face de sortie
- 23.: Surface courbe
- 24.: Matrice de micro-miroirs
- 25.: Elément optique de projection
- 26.: Source lumineuse
- 27.: Zone de transmission
- 27a: Rayon issu de la source
- 27b: Rayon réfracté
- 27c: rayon sortant
- 28.: Zone de réflexion
- 28a: Rayon issu de la source
- 28b: Rayon réfracté
- 28c: Rayon réfléchi
- 28d: Rayon sortant
- 29.: Rayon perdu
- 30.: Rayons collimatés
- 31.: Rayons collimatés
- 32.: Elément optique additionnel
- 33.: Bloc optique

## Revendications

1. Module lumineux pour véhicule automobile (1) configuré pour produire un faisceau de sortie (5), comprenant une source lumineuse (26), un système d'imagerie pixélisée et digitale, et un dispositif optique (17) intercalé, suivant le trajet des rayons lumineux issus de la source lumineuse (26), entre le source lumineuse (26) et le système d'imagerie pixélisée et digitale de sorte à transmettre au moins une partie des rayons lumineux issus de la source lumineuse (26) vers une surface d'impact du système d'imagerie pixélisée et digitale, **caractérisé en ce que** le dispositif optique (17) comprend une première portion configurée pour traiter optiquement une première partie des rayons lumineux issus de la source lumineuse (26) et une deuxième portion configurée pour traiter optiquement une deuxième partie, différente de la première partie, des rayons lumineux issus de la source lumineuse (26), et **en ce que** la première portion est configurée pour produire un premier faisceau de sortie présentant une première distribution spatiale de lumière sur la surface d'impact et **en ce que** la deuxième portion est configurée pour produire un deuxième faisceau de sortie présentant une deuxième distribution spatiale de lumière, différente de la première distribution, sur la surface d'impact.

2. Module selon la revendication précédente, dans lequel la première distribution spatiale est d'intensité lumineuse homogène dans une zone de contour fermé centrée sur la surface d'impact et couvrant au moins 50% de la surface d'impact.

3. Module selon l'une des revendications précédentes, dans lequel la deuxième distribution spatiale est d'intensité lumineuse croissante jusqu'à une zone de concentration maximale de lumière.

4. Module selon la revendication précédente, dans lequel la zone de concentration maximale de lumière inclut le centre de la surface d'impact.

5. Module selon l'une des deux revendications précédentes, dans lequel l'intensité lumineuse dans la zone de concentration maximale de lumière est supérieure à l'intensité lumineuse maximale de la première distribution spatiale.

6. Module selon l'une des revendications précédentes, dans lequel la deuxième portion du dispositif optique est configurée pour réfléchir des rayons lumineux vers un dioptre de sortie.

7. Module selon l'une des revendications précédentes, dans lequel la première portion du dispositif optique est configurée pour transmettre sans les réfléchir des rayons lumineux vers un dioptre de sortie.

8. Module selon les revendications 6 et 7 en combinaison, dans lequel le dispositif optique (17) comprend un bloc optique (33) comprenant une première face formant un dioptre d'entrée de rayons issus de la source lumineuse (26) et dotée d'une cavité (18) comprenant un fond (20) et une paroi latérale (19) et une deuxième face, opposée à la première face, formant un dioptre de sortie de rayons lumineux, le bloc (33) étant configuré pour réfléchir vers la deuxième face au moins une partie des rayons entrant dans le bloc (33) par la paroi latérale (19), et pour transmettre vers la deuxième face au moins une partie des rayons entrant dans le bloc (33) par le fond (20).

9. Module selon la revendication précédente, dans lequel le bloc (33) est configuré pour réfléchir vers la deuxième face au moins une partie des rayons entrant dans le bloc (33) par la paroi latérale (19) par réflexion totale interne.

10. Module selon l'une des deux revendications précédentes, dans lequel le bloc (33) est configuré pour réfléchir vers la deuxième face au moins une partie des rayons entrant dans le bloc (33) par la paroi latérale (19) par réflexion sur une surface réfléchissante le la paroi externe (21) du bloc (33).

11. Module selon l'une des trois revendications précédentes, dans lequel le bloc optique (33) est en une seule pièce venue d'une seule matière.

12. Module selon l'une des revendications précédentes, dans lequel le dispositif optique (17) comporte un bloc optique (33) comportant un dioptre d'entrée des rayons issus de la source lumineuse (26) et au moins un élément optique additionnel (32) séparé du bloc optique (33).

13. Module selon la revendication précédente, dans lequel le bloc optique (33) est configuré pour collimater au moins une partie de rayons en sortant et l'élément optique additionnel (32) est configuré pour concentrer les rayons collimatés.

14. Module selon l'une des revendications précédentes, dans lequel le système d'imagerie pixélisée et digitale comprend une matrice de micro-miroirs (24).

15. Module selon l'une des revendications précédentes, dans lequel la source lumineuse (26) comprend une face d'émission de lumière de forme rectangulaire, de préférence dotée d'au moins une diode électroluminescente.
